(19) **Europäisches Patentamt**
**European Patent Office**
**Office européen des brevets**

(11) **EP 2 057 244 B1**

(12) **EUROPEAN PATENT SPECIFICATION**

(45) Date of publication and mention
of the grant of the patent:
**12.05.2010 Bulletin 2010/19**

(51) Int Cl.:
*C09K 3/14* *(2006.01)*    *B24D 3/00* *(2006.01)*

(21) Application number: **07820000.3**

(86) International application number:
**PCT/EP2007/059103**

(22) Date of filing: **31.08.2007**

(87) International publication number:
**WO 2008/025838 (06.03.2008 Gazette 2008/10)**

(54) **INTERMEDIATE PRODUCT FOR USE IN THE PRODUCTION OF ABRADING OR CUTTING TOOLS**

ZWISCHENPRODUKT FÜR DIE HERSTELLUNG FÜR SCHLEIF- ODER SCHNEIDWERKZEUGE

PRODUIT INTERMÉDIAIRE S'UTILISANT POUR LA FABRICATION D'OUTILS D'ABRASION OU DE COUPE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **01.09.2006 EP 06119978**
**15.11.2006 EP 06124110**

(43) Date of publication of application:
**13.05.2009 Bulletin 2009/20**

(73) Proprietor: **Sheridan, Cedric**
**7423 Dondelange (LU)**

(72) Inventor: **Sheridan, Cedric**
**7423 Dondelange (LU)**

(74) Representative: **Office Freylinger**
**P.O. Box 48**
**8001 Strassen (LU)**

(56) References cited:
**EP-A- 0 533 443**       **WO-A-2006/076449**
**WO-A2-2004/053013**   **US-A- 4 770 907**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical field

The present invention generally relates to an intermediate product for use in the production of abrading or cutting tools, in particular to such an intermediate product that can be shaped into a desired shape and subjected to high-temperature treatment for forming an abrading or cutting tool.

### Background Art

Tools for cutting and/or abrading are conventionally fabricated of a suitable matrix material with minute abrasive grains, such as diamonds, embedded within the matrix material. Basically, such tools are formed by conventional powder metallurgical techniques, wherein the abrasive grains are initially mixed with the matrix material (e.g. metals, alloys, metal carbides etc., as well as mixtures thereof) in powder form and some binding agent, after which the mixture press-moulded to bond and shape the mixture into the desired tool. In the so-called hot-pressing method, the mixture is placed in a mould having the shape of the abrasive tool to be formed and pressed at high pressure and temperature to cause sintering of the sinterable material. According to the "cold press and sinter" technique, the mixture is first pressed at high pressure into the desired tool shape and thereafter fired at high temperature in a furnace to sinter the tool. As an alternative to these compaction techniques, it is known, for instance from document EP 0 754 106 B1, to provide soft and easily deformable preforms in the form of a slurry or paste containing the matrix material in powder form, abrasive grains and some liquid binder phase. The soft and easily deformable preforms are subsequently sintered under pressure. Tools fabricated in these or similar manners are commonly referred to as metal-bonded abrading or cutting tools.

Efficiency and lifetime of an abrading or cutting tool are among others determined by the degree of uniformity of the distribution of the abrasive grains on the surface or volume of the tool and by the retention strength of the abrasive grains within the surrounding matrix material. In tools fabricated according to any of the above-described techniques, the abrasive grains are randomly distributed, which means that some of them may be close together, possibly touch each other, while some regions of the tool may only have little density of abrasive grains. As a matter of fact, this negatively affects the cutting or abrading performance of the tool. The difficulty of uniformly distributing abrasive particles throughout the matrix material was first overcome by the method taught in US patent 3,779,726. This document proposes to tumble the abrasive grains in the presence of a powder of sinterable material and binding agent while controlled amounts of water are simultaneously sprayed thereon. In this way, each abrasive particle is singularly coated with a sinterable particulate mass in such a way that granules, so-called "pellets", are formed. These pellets are subsequently pressed into the desired shape at high pressure (35 tons per square inch, i.e. approximately 5000 atmospheres), possibly after being mixed with granulated metal powder. Those skilled in the art are aware that mixing the pellets with metal powder may cause the problem of segregation between the metal powder and the pellets. Another method for individually coating abrasive grains is disclosed in US patent 4,770,907. This method commences with the preparation of a slurry of a selected metal powder with a binding agent dissolved in an organic solvent in predetermined relative concentrations. The abrasive grain cores are then fluidized in a work vessel and the slurry is sprayed onto the abrasive grains cores during fluidization, whereby a generally uniform coating of the slurry builds and dries on each abrasive grain.

### Technical problem

It is an object of the present invention to improve the production of abrading or cutting tools.

This object is achieved by an intermediate product as claimed in claim 1.

### General Description of the Invention

According to the invention, an intermediate product for use in the production of abrading or cutting tools is provided in the form of a soft, easily deformable paste comprising powdery sinterable matrix material, binding agent and solvent for the binding agent, the paste having superabrasive particles dispersed therein, the superabrasive particles being individually encrusted within a coating of presintered material.

For the purposes of the present, the terms "soft" and "easily deformable" are used in conjunction with "paste" to indicate that the paste has a consistency approximately like modelling clay, such that it could be shaped by hand. It should be noted, however, that the particles of sinterable matrix material and the superabrasive particles themselves are extremely hard and that the softness and the malleability of the paste is due to the binding agent and its solvent, which make the hard particles stick together. It shall further be noted that "superabrasive particles" in the present context may include diamonds, boron nitride particles and like particles. The term "superabrasive" is used to indicate that the encrusted particles are of increased hardness with respect to the particles of sinterable matrix material (e.g. tungsten carbide, fused tungsten carbide, tungsten carbide cobalt, nickel, tin, chromium, cobalt, bronze, copper alloy, or the like), which by some are regarded as "abrasive" particles. The terms "presintered coating" or "coating of presintered material" mean that the coatings have been subjected to a high-temperature treatment such that they form a hard crust on the superabrasive particles.

As will be appreciated, the intermediate product according to the invention facilitates the manufacture of an abrasive or cutting tool since one can easily bring it into the desired shape, e.g. by applying it to a mould and pressing it, by moulding injection or by extrusion. Once the desired shape has been reached, the intermediate product can be subjected to a high-temperature treatment for fixing the shape. Such high-temperature treatment may, for instance, comprise fusing, sintering and/or infiltration of the matrix material with a braze that bonds the matrix material and the encrusted superabrasive particles. The high-temperature treatment may be carried out under atmospheric pressure or under higher pressure (e.g. between about 30 and about 40 MPa for the "hot pressing" technique, between about 100 and about 150 MPa for the "Hot Isostatic Pressing" (HIP) technique or between about 2 and about 10 MPa for the so-called sinter-HIP technique). Because each superabrasive particle is individually surrounded with a presintered coating, the distance between two such particles corresponds to at least twice the thickness of the coatings. When the paste is pressed, injected or extruded into the mould, the presintered coating furthermore prevents a direct contact between the superabrasive particles and the mould or the walls of the extrusion/injection moulding system, which reduces damage to the latter.

Preferably, the superabrasive particles are of substantially the same size with coatings of substantially the same thickness. In some cases, it will however be considered advantageous if the superabrasive particles have a broader size distribution and/or their coatings a broader thickness distribution.

Forming of the intermediate product according to the invention may for instance be achieved by mixing the superabrasive particles, the powdery sinterable matrix material the binding agent and the solvent for the binding agent, e.g. in a blender, a mixing drum, a mixing bowl or any other suitable container. According to a first variant for mixing the different components, one forms a first mixture by mixing the powdery sinterable material and the encrusted superabrasive particles, and a second mixture by mixing binding agent and solvent for the binding agent. Subsequently, one mixes the first and second mixtures so as to form the paste. The skilled will note that in this variant, the powdery sinterable matrix material and the encrusted superabrasive particles might undergo segregation and that if this is the case, the first and second mixtures should be mixed together shortly after forming the first mixture to avoid segregation as much as possible. According to a second variant for mixing the different components one first forms a first mixture by mixing binding agent and solvent for the binding agent. On then introduces powdery sinterable matrix material into this first mixture, whereby a second mixture is formed. Encrusted superabrasive particles are then introduced into the second mixture and the resulting mixture is mixed so as to form a soft, easily deformable paste. According to a third variant for mixing the components, one first mixes the solid-state components, i.e. the superabrasive particles, the powdery sinterable matrix material and the binding agent, and then adds to the so-obtained mixture of particles the liquid solvent. The solvent can simply be poured into the particle mixtureor sprayed onto the mixture until one obtains a paste of the desired consistency.

According to a preferred embodiment of the invention, the crust or coating of presintered material surrounding the superabrasive particles has porosity between 5 and 60%. It shall be understood that "porosity of the coating", as used herein, is the ratio of the volume of pores, cracks, fissures or like cavities in the coating to the total volume of the encrusted particle. It should be noted that porosity of the coating on the superabrasive particles influences the retention strength of the latter within the finished tool. During the final high-temperature treatment of the shaped intermediate product, molten metal penetrates into pores, cracks or fissures within the crust or coating and after cooling firmly bonds the encrusted superabrasive particle to the surrounding matrix material. The porosity of the coatings is specifically important if no or only a weak metallurgical bond forms between the braze metal or the metal bond and the material of the coating. For purposes of the present, "metallurgical bond" refers to attractive forces that hold together atoms in a crystalline or metallic type structure. Little metallurgical bond e.g. forms between a coating of tungsten carbide (e.g. fused tungsten carbide, monotungsten carbide or ditungsten carbide) and brass. In this or like cases, the porosity of the coatings preferably amounts to at least 15%, so that the encrusted superabrasive particles (sometimes also referred to as "granules" or "pellets") can be "anchored" within the matrix material. If, however, a significant metallurgical bond forms, as is the case for instance with a manganese braze and tungsten carbide coatings, the porosity may be lesser, e.g. below 10%. In any case, porosity of the coatings more preferably ranges between the above-mentioned 5 and 60%, more preferably between 10 and 50% and most preferably between 15 and 50%.

According to another preferred embodiment of the invention, the binding agent and the solvent together represent between 20 and 80% and more preferably between 30 and 70% of the volume of the paste. The binding agent preferably comprises or consists of a cellulose ether, most preferably methylcellulose and/or ethylcellulose, whereas the solvent for the binding agent preferably comprises water or an organic solvent such as, for instance, an alcohol or an acetale. Preferably, the solvent has an elevated boiling point, i.e. above 100°C. It has been found that glycerol formal (boiling point between 191 and 195°C) and 2,5,7,10-tetraoxaundecane (boiling point about 200°C) are particularly well suited as solvent, e.g. for methylcellulose, because of their high solvent power. Those skilled will note that during the high-temperature treatment of the shaped intermediate product, the solvent and the binding agent evaporate or decompose into gaseous matter and are evacuated from the solidifying paste. This is accompanied, e.g. in the hipping technique, by a reduction of the volume of the intermediate product. For instance in the infiltration technique, however, the volume occupied by the solvent and the binding agent thus corresponds approximately to the volume which can be occupied by a braze or molten metal during the high-temperature treatment. The proportion of binding agent and solvent with respect to the matrix material thus determines the compactness of the matrix material. It is worthwhile noting that if, on the one hand, the proportion of binding agent and solvent is chosen too high, e.g. above 80%, the pores and cavities formed during evaporation may become so large that infiltration of the matrix material by molten metal may not be efficient. On the other hand, if the amount of binding agent and solvent is too low e.g. below 20%, this might also negatively affect infiltration. It has been found that a proportion of binding agent and solvent in the above-mentioned ranges achieves best results.

Those skilled will furthermore appreciate that the choice of methylcellulose and/or ethylcellulose as binding agent and glycerol formal and/or 2,5,7,10-tetraoxaundecane as solvent present several advantages, in particular: (a) rapid dissolution of the binding agent by the solvent at room temperatures, (b) chemical inertness with respect to the particles of sinterable material and the abrasive particles, in particular no oxidation of metallic particles, (c) lasting consistency of the paste due to the low volatility of the solvent, (d) nearly residue-free vanishing of the binding agent/solvent during the high-temperature treatment (methylcellulose, ethylcellulose, glycerol formal and 2,5,7,10-tetraoxaundecane evaporate easily at temperatures above 500-600°C). (a) implies, in particular, that mixing of the paste may be achieved at room temperature, and (c) that the paste could e.g. be stored during longer time (e.g. several weeks) without significant loss of malleability. The paste furthermore can easily be shipped to an end user, e.g. a tool manufacturer. Last but not least, since if the paste does not dry quickly, it is usually without significant consequences if someone inadvertently leaves the paste container open over night.

**Brief Description of the Drawings**

Further details and advantages of the present invention will be apparent from the following detailed description of not limiting embodiments with reference to the attached drawings, wherein:

Fig. 1 is a schematic illustration of an intermediate product according to the present invention;

Fig. 2 is a schematic illustration of a method for forming superabrasive particles encrusted within a coating of sintered material;

Fig. 3 is a schematic illustration of a method for fabricating an intermediate product according to the present invention;

Fig. 4 is a schematic illustration of a possible process for forming an abrading or cutting tool using the easily deformable paste.

**Description of Preferred Embodiments**

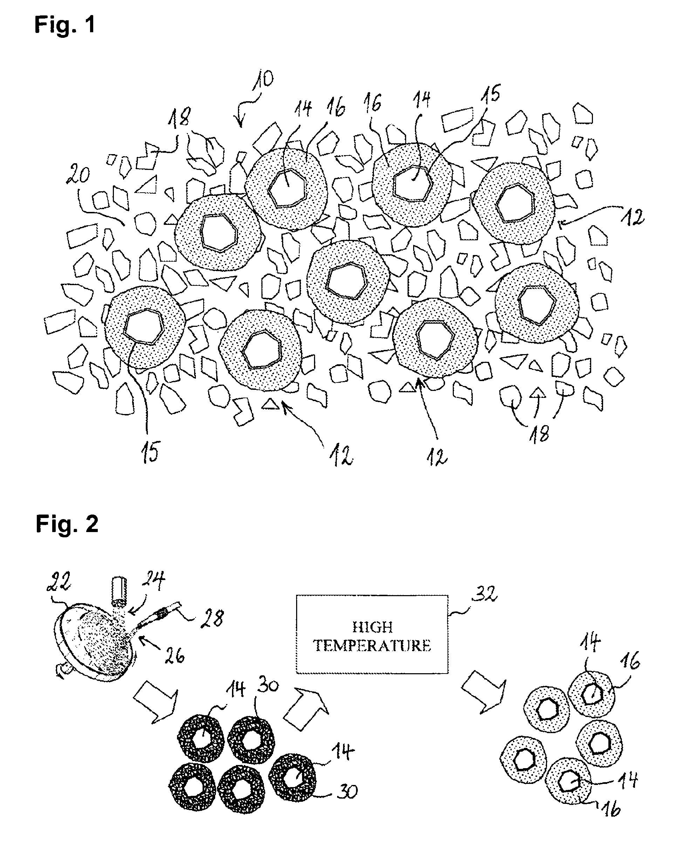

Fig. 1 shows a generally soft, easily deformable particulate paste 10 for use in the production of cutting or abrading tools. The paste 10 comprises abrasive grains 12 in the form of superabrasive particles 14 (like diamonds or boron nitride particles) encrusted within a presintered, coating 16, particles of sinterable material 18 like tungsten carbide (e.g. monotungsten carbide, ditungsten carbide, fused tungsten carbide, etc.), metal particles (e.g. nickel, cobalt, iron, copper, chromium, tin, etc.) and/or metal-alloy particles (e.g. bronze, brass, cobalt alloys, nickel alloys, iron alloys, etc.) as well as binding agent dissolved in a suitable solvent. The binding agent and the solvent form a viscous, glutinous or jelly-like liquid 20 that fills the interstices between the particles 12, 18 and provides for the adhesion of the particles 12, 18 to one another.

Fig. 2 schematically shows a possible process for producing superabrasive particles 12 individually surrounded with a sintered coating 16. Superabrasive particles are provided in a rotary mixing container 22. The amount of superabrasive particles and the rotational speed of the mixing container are chosen such that the superabrasive particles roll on themselves under the action of gravity. A mixture 24 of a powder of sinterable material and a binding agent is progressively sifted onto the superabrasive particles, while a fine spray 26 of solvent for the chosen binding agent is directed thereto by nozzle 28. It should be noted that the powder of sinterable material, the binding agent and the solvent may be the same as or different from those used in the paste tot be fabricated with the coated superabrasive particles. Under the action of the solvent, the binding agent is dissolved and the powder of sinterable material agglomerates on individual superabrasive particles in form of a sticky, sinterable particulate mass 30. The so-formed granules are subjected to high-temperature treatment, schematically shown at 32, whereby the particulate mass 30 is transformed into a hard coating 16. It should be noted that the superabrasive particles 14 can be initially provided with a thin adhesion-promoting coating 15, applied e.g. in a previous chemical vapour deposition (CVD) process or any other suitable process.

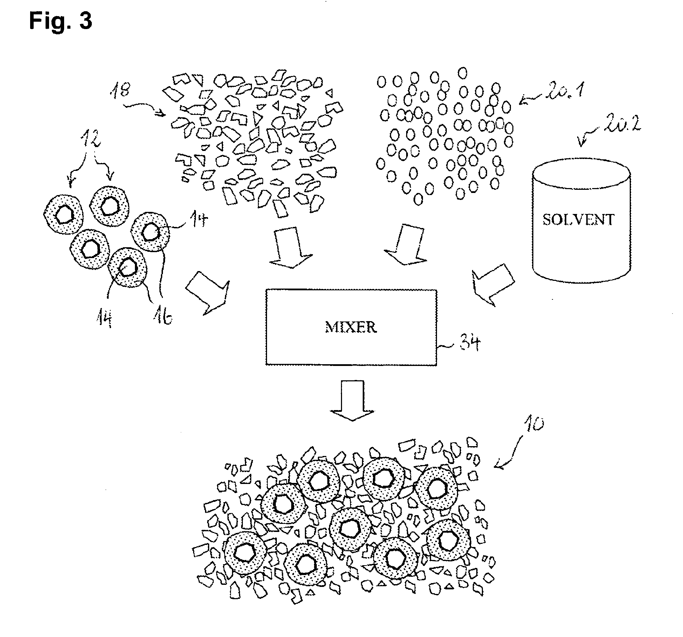

Fig. 3 schematically illustrates a process for providing an intermediate product in form of a soft, easily deformable paste 10 for the production of abrading or cutting tools. In a mixing container, shown illustratively as mixer 34, abrasive grains 12 in the form of superabrasive particles 14 encrusted within a sintered coating 16 are mixed with powdery sinterable matrix material 18, binding agent 20.1 and solvent 20.2 for the binding agent 20.1. As discussed above, the mixing of the different components of the paste 10 can be achieved in that the coated superabrasive particles 12 and the particles of sinterable matrix material 18 are mixed and that the binding agent 20.1, which has been dissolved by the solvent 20.2 in a separate container is added to the mixture of hard particles 12, 18. Alternatively, one mixes first the binding agent 20.1 and the solvent 20.2 and then separately adds the powdery sinterable matrix material 18 and the coated superabrasive particles 12. As yet a third alternative, the binding agent 20.1 can be mixed with the hard particles 12, 18 prior to the addition of the solvent 20.2. The binding agent 20.1 and the solvent 20.2 could also be added gradually and separately during the mixing process.

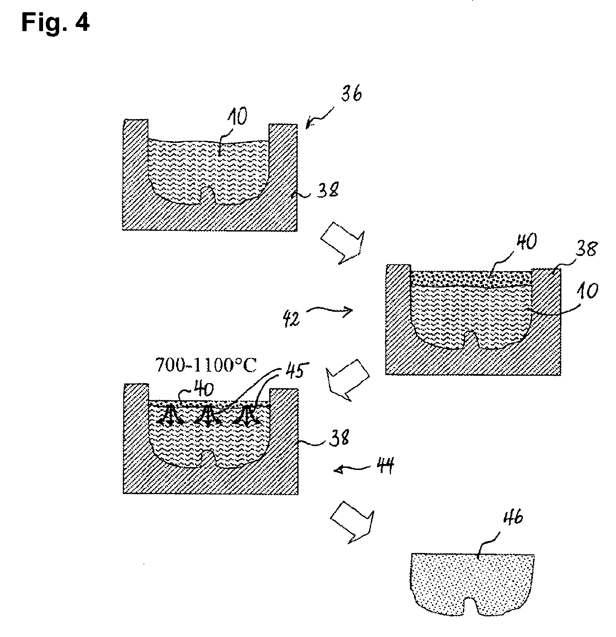

Fig. 4 schematically shows a possible process for forming an abrading or cutting tool, e.g. a drill bit, an insert for such a drill bit, a grinding wheel, a saw insert, a saw bead or the like. As shown at 36, the soft, easily deformable paste 10 is applied to a mould 38. The spreading of the paste can easily be done by hand, since the paste is about as malleable as modelling clay. Thereafter, the paste is compacted, and braze metal 40 in form of coarse powder, lump pieces or chunks is applied onto the paste 10 (shown at 42) and the temperature is raised (e.g. to 700-1100°C) with or without the application of pressure (shown at 44). Infiltration of the braze 40 is illustrated schematically by arrows 45. After the cooling period, the finished tool 46 can be taken from the mould.

**Example 1: WC/Co 50/50 encrusted diamonds pasted with extra fine Co powder**

A first example of a composition of a soft, easily deformable paste for producing a cutting or abrading tool is now discussed in more detail. In this example, the paste comprises as encrusted superabrasive particles diamonds encrusted in a presintered tungsten carbide/cobalt coating.

Preparation of the presintered encrusted superabrasive particles

The metal powder bond for the encapsulation of the diamonds was a 50/50 by weight mixture of tungsten carbide powder (Fisher Sub Sieve Size 1 μm) and cobalt powder (FSSS 1.2 μm). 300 ct (1 ct =1 carat = 0.2 g) of MBS955 Si2 25/35 Mesh diamonds were coated according to the method described in US 3,779,726. The total weight of the encapsulated diamonds before presintering amounted to 248 g.

Before presintering, the encapsulated diamonds were screened, which yielded the following particle size distribution:

0.00%wt > 1.18 mm

17.34 %wt > 1 mm

62.91 %wt > 850 μm

19.75%wt >500 μm

0.00%wt < 500 μm

The granules were then sintered in a Borel furnace under protective atmosphere ($H_2$). The temperature was raised first from 18°C to 500°C during 60 minutes, the latter temperature was then maintained during 30 minutes. Thereafter, the temperature was further raised to 850°C during 180 minutes, and after maintaining the temperature at 850°C during 60 minutes, the now presintered granules were cooled down.

After presintering, the total weight of the granules amounted to 233 g, reflecting that binding agent and solvent evaporated during the sintering process. The particle size distribution after sintering was determined to:

0.00%wt > 1.18 mm

9.87 %wt > 1 mm

65.67%wt > 850 μm

24.46%wt >500 μm

0.00%wt < 500 μm

The porosity of the presintered granules amounted to 29%. As mentioned already before, "porosity" as used herein designates the volume of the pores in the coating or crust of a granule, divided by the total volume of the granule (here: diamond and its presintered coating).

Determination of porosity

To determine the porosity of the presintered granules, a defined volume of granules (here approximately 25 $cm^3$, no compaction of the granules) was carefully weighed, which yielded in this case 71.91 g. The granules of this probe were coated with a very thin film so that the pores were substantially sealed.

With the known density of diamond (3,52 g/$cm^3$), we calculated the weight content of diamond in our probe:

$$\text{Diamond weight in probe} = (300 \text{ ct} / 233 \text{ g}) \times 71.91 \text{ g} \times 0.2 \text{ g/ct}$$

$$= 18.52 \text{ g.}$$

Using this result we calculated the theoretical volume of diamond in our probe as 18.52 / 3.52 = 5.26 $cm^3$.

Using the metal bond's theoretical density (WC/Co 50/50) of 11.36 g/$cm^3$) we calculated the theoretical volume of metal bond in our probe as (71.91-18.52) / 11.36 = 4.70 $cm^3$.

As total theoretical volume (without interstices and pores) of our probe we obtain 4.70 + 5.26 = 9.96 $cm^3$.

The probe of granules coated with the sealing film were poured into a Duran beaker. Distilled water was metered in up to a level of 30 $cm^3$, while the beaker was gently tapped and the granules smoothly agitated to eliminate air bubbles. The amount of water needed to fill the beaker up to the desired level corresponds to the volume of the presintered granules (without the interstices between them). In our case, 16 $cm^3$ of water were added, the actual volume of the granules thus was 14 $cm^3$. It should be noted that because of the thin sealing film, water could not penetrate into the pores of the granules. The porosity can now easily be calculated as the ratio of the difference between the actual and the theoretical volumes of the presintered granules to the actual volume. In our case, the calculation yields: (14 - 9.96) / 14 = 29 %.

In our case, the pores of the granules were closed in the following way. 1 g of ethylcellulose available from Dow under trade designation Ethocel™ Std 100 FP Premium was dissolved in 40 ml of acetone. To achieve complete dissolution, the mixture was agitated and then made rest for about 45 minutes until the solution was clear and free of air bubbles. The probe of 71.91 g of presintered granules was then smoothly poured into the solution. To eliminate air bubbles captured between the granules and to allow penetration of the solution into the pores of the granules, the solution with the granules was gently agitated and thereafter made rest for 15 minutes until all bubbles had disappeared. The granules contained in the solution were then poured onto a sieve of 300 Mesh and dried on the sieve. To avoid formation of agglomerates of granules or adhesion thereof on the sieve, they were gently rolled on the sieve with a finger during the drying. When the granules were very close to be completely dried, they were poured again onto a sieve of 1 mm and sieved to make sure that no granules were sticking to one another. (This operation may be repeated several times until the granules do not stick to one another any longer.) The granules were now coated with a very thin film of Ethocel™.

It should be noted that the determination of the porosity could also be achieved using Archimedes' principle. According to this method, a plurality of coated superabrasive particles are embedded within a resin (preferably a transparent one, such as e.g. epoxy or polyester resin), which must not enter the pores of the granules. Embedding of the granules should be done very carefully so as to avoid any air bubbles between the granules. The resin is then cured and the overall density of the block is determined using Archimedes' principle. Knowing the weight of the diamonds, the coatings, the resin as well as the respective densities, one can calculate the porosity. The latter method allows achieving higher accuracy in porosity determination if it is carefully executed, i.e. if air bubbles are carefully avoided. The drawback is that it takes much longer.

Preparation of a paste at FEPA C50 (12.50%vol of diamonds) with extra fine Co powder

An illustrative calculation of the weight of granules of the above-described type for achieving a diamond concentration of 12.50%vol in 25 $cm^3$ of malleable paste is discussed. Let the following notation apply:

X = diamond weight (to be determined) in the paste, and

Y = weight of the granules (to be determined) in the paste.

Required volume of diamonds = 25 x 12.50% = 3.125 cm$^3$. X is determined as X = 3.125 $\times$ 3.52 = 11 g or 55 ct. This yields for Y: Y = 55 $\times$ (233 / 300) = 42.72 g.

The 25 ml of paste were produced using 42.72 g of the above-described granules, 40 g of extra fine Co powder, 1 g of Ethocel 100 FP premium (trade designation) and 16 ml of butylal. The ingredients were mixed in a bowl until a malleable paste was obtained. The 25 cm$^3$ bucket was filled with the paste to check that the paste filled entirely the volume of the bucket.

**Example 2: Co encrusted diamonds pasted with carbonyl Fe type CN powder:**

Preparation of the presintered encrusted superabrasive particles

The metal powder bond for the encapsulation of the diamonds in this case consisted of cobalt powder (Co, FSSS 1.2 $\mu$m). 500 ct of MBS960 Ti2 20/25 Mesh diamonds were coated according to the method described in US 3,779,726. The total weight of the encapsulated diamonds before presintering amounted to 301 g.

Particle size distribution before presintering:

0.00%wt > 1.40 mm

24.25 %wt > 1.18 mm

71.43%wt > 1.00 $\mu$m

4.32%wt > 850 $\mu$m

0.00%wt < 850 $\mu$m

Presintering conditions: Borel furnace under protective atmosphere (H2). Presintering cycle:

Heating from 18 to 500°C during 60 minutes

Maintaining 500°C during 30 minutes

Heating from 500 to 850°C during 180 minutes

Maintaining the temperature of 850°C during 60 minutes

Cooling down

After the presintering step, the particle size distribution was determined as:

0.00%wt > 1.40 mm

0.35 %wt > 1.18 mm

36.17%wt > 1.00 $\mu$m

63.38%wt > 850 $\mu$m

0.10%wt>710 $\mu$m

0.00%wt < 710 $\mu$m

The total weight of the encapsulated diamonds after presintering was 282 g.

Determination of Porosity

The porosity of the presintered granules was determined in the same way as in example 1. In this case, an uncompacted 25 cm$^3$ probe of the granules weighed 77.77 g.

For preparing the solution for closing the pores of the granules 1 g Ethocel™ Std 100 FP Premium and 40 ml of acetone were mixed. The mixture of Ethocel™ and acetone was agitated for complete dilution, then made rest for 45 minutes time until the solution was clear and free of air bubbles. The probe of 77.77 g of granules was then smoothly poured into the solution, gently agitated to eliminate all air bubbles and made rest for 15 minutes until all bubbles had disappeared. The granules were then poured onto a sieve of 300 Mesh and dried, whereby they were rolled with a finger. When the granules were close to be completely dried, they were sieved with a sieve of 1.18 mm. This operation was repeated until the granules did not stick to one another any longer.

In this case, the metal bond theoretical density was 8.9 g/cm$^3$. The diamond content in the probe was 77.77 x 500 / 282) x 0.2 = 27.58 g. The theoretical volume of the diamonds was 27.58/3.52 = 7.84 cm$^3$ and the theoretical volume of the metal bond (77.77-27.58)/8.9 = 5.64 cm$^3$. The total theoretical volume of the granules at full density thus yielded to be 7.84 + 5.64 = 13.48 cm$^3$.

The sealed granules were poured into a Duran beaker, which was thereafter filled up to the level of 30 cm$^3$. The amount of water needed in this example was 14.5 cm$^3$. The actual volume of the granules thus was 30 - 14.50 = 15.50 cm$^3$.

It followed: porosity of the granules = (15.50 - 13.48) / 15.50 = 13%vol.

Preparation of a paste at FEPA C100 (25%vol of diamonds) with Carbonyl Iron type CN powder

Using these granules, a paste at FEPA C100 (25.00%vol of diamonds) with Carbonyl Iron type CN powder was prepared.

The calculation of the required amount of granules for diamond concentration of 25.00%vol in 25 cm$^3$ of paste yields:

Required volume of diamonds = 25 x 25.00% = 6.25 cm$^3$,

Amount of diamonds: $6.25 \times 3.52 = 22$ g or 110 ct,

Amount of granules: $110 \times 282 / 500 = 62.04$ g

The 25 ml of paste were produced using 62.04 g of the described granules, 30 g of FeCN, 1 g of Methocel™ A4M as binding agent and 11 ml of glycerol formal as solvent. The ingredients were mixed in a bowl until a malleable paste was obtained. The 25 cm$^3$ bucket was filled with the paste to check that the paste filled entirely the volume of the bucket.

**Claims**

1. An intermediate product for use in the production of abrading or cutting tools, **characterised in that** said intermediate product is a soft, easily deformable paste comprising powdery sinterable matrix material, binding agent and solvent for said binding agent, said paste having superabrasive particles dispersed therein, said superabrasive particles being individually encrusted within a coating of presintered material.

2. The intermediate product as claimed in claim 1, **characterised in that** said coating of presintered material has porosity between 5 and 60%.

3. The intermediate product as claimed in claim 1 or 2, **characterised in that** said binding agent and said solvent together represent between 20 and 80% of the volume of said intermediate product.

4. The intermediate product as claimed in any one of claims 1 to 3, **characterised in that** said binding agent comprises a cellulose ether.

5. The intermediate product as claimed in any one of claims 1 to 4, **characterised in that** said solvent comprises an alcohol or an acetale.

6. The intermediate product as claimed in any one of claims 1 to 4, **characterised in that** said solvent comprises glycerol formal and/or tetraoxaundecane.

7. A method for forming a intermediate product for use in the production of abrading or cutting tools according to any one of the preceding claims, comprising:

   mixing superabrasive particles and powdery sinterable matrix material thereby forming a first mixture, said superabrasive particles being individually encrusted within a coating of presintered material;
   mixing binding agent and solvent for said binding agent thereby forming a second mixture; and
   mixing said first and second mixtures so as to form a soft, easily deformable paste.

8. A method for forming a intermediate product for use in the production of abrading or cutting tools according to any one of claims 1 to 6, comprising:

   mixing binding agent and solvent for the binding agent, thereby forming a first mixture;
   introducing powdery sinterable matrix material into said first mixture, thereby forming a second mixture; and
   introducing superabrasive particles into said second mixture, said superabrasive particles being individually encrusted within a coating of presintered material, and mixing the so-obtained mixture so as to form a soft, easily deformable paste.

9. A method for forming a intermediate product for use in the production of abrading or cutting tools according to any one of the claims 1 to 6, comprising

   mixing superabrasive particles, powdery sinterable matrix material and binding agent, said superabrasive particles being individually encrusted within a coating of presintered material;
   adding solvent for said binding agent to the so-obtained mixture so as to form a soft, easily deformable paste.

10. A method for forming and abrading or cutting tool, comprising:

   providing a mould;
   applying to said mould an intermediate product as claimed in any one of claims 1 to 6, thereby shaping said intermediate product;
   subjecting said shaped intermediate product to a high-temperature treatment for fixing a shape thereof.

11. The method according to claim 10, wherein said high-temperature treatment comprises infiltration of said matrix material with a braze and/or sintering to bond said matrix material and said encrusted superabrasive particles.

**Patentansprüche**

1. Zwischenprodukt zur Verwendung bei der Herstellung von Schleif- oder Schneidwerkzeugen, **dadurch gekennzeichnet, dass** das Zwischenprodukt eine weiche, leicht verformbare Paste ist, die ein pulverförmiges, sinterbares Matrixmaterial, ein Bindemittel und ein Lösungsmittel für das Bindemittel umfasst, wobei die Paste fein in ihr verteilte superabrasive Partikel aufweist, wobei die superabrasiven Partikel einzeln mit einer Beschichtung aus vorgesintertem Material überkrustet sind.

2. Zwischenprodukt nach Anspruch 1, **dadurch gekennzeichnet, dass** die Beschichtung aus vorgesintertem Material eine Porosität zwischen 5 und 60% aufweist.

3. Zwischenprodukt nach Anspruch 1 oder 2, **dadurch gekennzeichnet, dass** das Bindemittel und das Lösungsmittel zusammen zwischen 20 und 80% des Volumens des Zwischenprodukts repräsentieren

4. Zwischenprodukt nach irgendeinem der Ansprüche 1 bis 3, **dadurch gekennzeichnet, dass** das Bindemittel einen Celluloseether umfasst

5. Zwischenprodukt nach irgendeinem der Ansprüche 1 bis 4, **dadurch gekennzeichnet, dass** das Lösungsmittel einen Alkohol oder ein Acetal umfasst

6. Zwischenprodukt nach irgendeinem der Ansprüche 1 bis 4, **dadurch gekennzeichnet, dass** das Lösungsmittel Glycerinformal und/oder Tetraoxaundecan ist

7. Verfahren zur Bildung eines Zwischenprodukts zur Verwendung bei der Herstellung von Schleif- oder Schneidwerkzeugen nach irgendeinem der vorangehenden Ansprüche, Folgendes umfassend:

   Mischen von superabrasiven Partikeln und pulverförmigem, sinterbarem Matrixmaterial, wodurch eine erste Mischung gebildet wird, wobei die superabrasiven Partikel einzeln mit einer Beschichtung aus vorgesintertem Material überkrustet sind;
   Mischen des Bindemittels und des Lösungsmittels für das Bindemittel, wodurch eine zweite Mischung gebildet wird; und
   Mischen der ersten und zweiten Mischung derart, dass eine weiche, leicht verformbare Paste gebildet wird

8. Verfahren zur Bildung eines Zwischenprodukts zur Verwendung bei der Herstellung von Schleif- oder Schneidwerkzeugen nach irgendeinem der Ansprüche 1 bis 6, Folgendes umfassend:

   Mischen des Bindemittels und des Lösungsmittels für das Bindemittel, wodurch eine erste Mischung gebildet wird;
   Einbringen von pulverförmigem, sinterbarem Matrixmaterial in die erste Mischung, wodurch eine zweite Mischung gebildet wird; und
   Einbringen von superabrasiven Partikeln in die zweite Mischung, wobei die superabrasiven Partikel einzeln mit einer Beschichtung aus vorgesintertem Material überkrustet sind, und Mischen der so erhaltenen Mischung derart, dass eine weiche, leicht verformbare Paste gebildet wird

9. Verfahren zur Bildung eines Zwischenprodukts zur Verwendung bei der Herstellung von Schleif- oder Schneidwerkzeugen nach irgendeinem der Ansprüche 1 bis 6, Folgendes umfassend.

   Mischen von superabrasiven Partikeln, pulverförmigem, sinterbarem Matrixmaterial und Bindemittel, wobei die superabrasiven Partikel einzeln mit einer Beschichtung aus vorgesintertem Material überkrustet sind;
   Zusetzen von Lösungsmittel für das Bindemittel zu der so erhaltenen Mischung derart, dass eine weiche, leicht verformbare Paste gebildet wird

10. Verfahren zur Bildung eines Schleif- oder Schneidwerkzeugs, Folgendes umfassend:

    Bereitstellen eines Formwerkzeugs;
    Zubringen eines Zwischenprodukts nach irgendeinem der Ansprüche 1 bis 6 zum Formwerkzeug, wodurch das Zwischenprodukt geformt wird;
    Unterziehen des geformten Zwischenprodukts einer Hochtemperaturbehandlung, um eine Form davon zu verfestigen

11. Verfahren nach Anspruch 10, wobei die Hochtemperaturbehandlung die Infiltration des Matrixmaterials mit einem Hartlot und/oder Sintergut umfasst, um das Matrixmaterial und die überkrusteten superabrasiven Partikel zu binden

**Revendications**

1. Produit intermédiaire destiné à une utilisation dans la production d'outils d'abrasion ou de coupe, **caractérisé en ce que** ledit produit intermédiaire est une pâte souple facilement déformable comprenant un matériau matrice frittable pulvérulent, un agent de liaison et un solvant pour ledit agent de liaison, ladite pâte ayant des particules superabrasives dispersées dans celle-ci, lesdites particules superabrasives étant individuellement incrustées au sein d'un revêtement d'un matériau pré-fritté

2. Produit intermédiaire selon la revendication 1, **caractérisé en ce que** ledit revêtement d'un matériau pré-fritté a une porosité entre 5 et 60%.

3. Produit intermédiaire selon la revendication 1 ou 2, **caractérisé en ce que** ledit agent de liaison et ledit solvant représentent ensemble entre 20 et 80% du volume dudit produit intermédiaire

**4.** Produit intermédiaire selon l'une quelconque des revendications 1 à 3, **caractérisé en ce que** ledit agent de liaison comprend un éther de cellulose.

**5.** Produit intermédiaire selon l'une quelconque des revendications 1 à 4, **caractérisé en ce que** ledit solvant comprend un alcool ou un acétale.

**6.** Produit intermédiaire selon l'une quelconque des revendications 1 à 4, **caractérisé en ce que** ledit solvant comprend du glycérol formal et/ou du tétraoxaundécane

**7.** Procédé de formation d'un produit intermédiaire destiné à une utilisation dans la production d'outils d'abrasion ou de coupe selon l'une quelconque des revendications précédentes, comprenant les étapes de mélanger des particules superabrasives et du matériau matrice frittable pulvérulent formant ainsi un premier mélange, lesdites particules superabrasives étant individuellement incrustées au sein d'un revêtement d'un matériau pré-fritté ;

mélanger de l'agent de liaison et du solvant pour ledit agent de liaison formant ainsi un deuxième mélange ; et mélanger lesdits premier et deuxième mélanges de façon à former une pâte souple facilement déformable

**8.** Procédé de formation d'un produit intermédiaire destiné à une utilisation dans la production d'outils d'abrasion ou de coupe selon l'une quelconque des revendications 1 à 6, comprenant les étapes de:

mélanger de l'agent de liaison et du solvant pour l'agent de liaison, formant ainsi un premier mélange ; introduire du matériau matrice frittable pulvérulent dans ledit premier mélange, formant ainsi un deuxième mélange ; et
introduire des particules superabrasives dans ledit deuxième mélange, lesdites particules superabrasives étant individuellement incrustées au sein d'un revêtement d'un matériau pré-fritté, et mélanger le mélange ainsi obtenu de façon à former une pâte souple facilement déformable

**9.** Procédé de formation d'un produit intermédiaire destiné à une utilisation dans la production d'outils d'abrasion ou de coupe selon l'une quelconque des revendications 1 à 6, comprenant les étapes de

mélanger des particules superabrasives, du matériau matrice frittable pulvérulent et de l'agent de liaison, lesdites particules superabrasives étant individuellement incrustées au sein d'un revêtement d'un matériau pré-fritté ; ajouter du solvant pour ledit agent de liaison au mélange ainsi obtenu de façon à former une pâte souple facilement déformable.

**10.** Procédé de formation d'un outil d'abrasion ou de coupe, comprenant :

la préparation d'un moule ;
l'application audit moule d'un produit intermédiaire selon l'une quelconque des revendications 1 à 6, mettant ainsi en forme ledit produit intermédiaire ;
la soumission dudit produit intermédiaire mis en forme à un traitement à haute température pour fixer une forme de celui-ci.

**11.** Procédé selon la revendication 10, dans lequel ledit traitement à haute température comprend une infiltration dudit matériau matrice avec une brasure et/ou un matériau de frittage pour lier ledit matériau matrice et lesdites particules superabrasives incrustées

EP 2 057 244 B1

## Fig. 1

## Fig. 2

HIGH TEMPERATURE

**Fig. 3**

# Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0754106 B1
- US 3779726 A

- US 4770907 A